# EUROPÄISCHE PATENTSCHRIFT

(11) **EP 0 491 205 B1**
(45) Veröffentlichungstag und Bekanntmachung des Hinweises auf die Patenterteilung: **19.10.1994**
(21) Anmeldenummer: 91120544.1
(22) Anmeldetag: 29.11.1991
(51) Int. Cl.: B44B 5/00

(54) **Verfahren zur Herstellung von Platinen für Kraftfahrzeug-Kennzeichenschilder**
Method for the production of plate boards for motor vehicle identification plates
Procédé pour la production des platines pour plaques d'immatriculation de véhicules automobiles

(30) Priorität: 17.12.1990 DE 4040386
(43) Veröffentlichungstag der Anmeldung: 24.06.1992
(73) Patentinhaber: Utsch, Joachim, D-57080 Siegen (DE)
(72) Erfinder: Utsch, Joachim, D-57080 Siegen (DE); Utsch, Gerhard, W-5900 Siegen (DE); Utsch, Manfred, W-5900 Siegen (DE)
(74) Vertreter: Liebau, Gerhard, Dipl.-Ing.

(56) Entgegenhaltungen:
- WO-A-90/07994
- DE-A- 475 798
- DE-A- 1 772 467
- DE-A- 3 741 232
- FR-A- 2 646 109
- US-A- 4 420 515

## Beschreibung

Die Erfindung bezieht sich auf ein Verfahren zur Herstellung von Platinen für Kraftfahrzeug-Kennzeichenschilder, deren erhabene Ränder und Zeichen durch Aufdrücken eines mit heiß ablösbarer Farbe beschichteten Kunststoff-Folienbandes eingefärbt werden, wobei zunächst von einem Coil ein Aluminium-Blechband abgezogen wird, auf das dann eine reflektierende Kunststoffolie aufkaschiert wird, und wobei daraufhin Einzelschilder-Platinen abgeschnitten und mit geprägtem Rand versehen werden.

Nach einer im Juli 1989 verkündeten Verordnung des Bundesverkehrsministers wurde die obligatorische Einführung reflektierender Kfz-Kennzeichen vorgesehen, so daß bei Neuzulassungen jetzt nur noch reflektierende Kennzeichenschilder verwendet werden.

In der DE 37 41 232 A1 wurde bereits darauf hingewiesen, daß es schwierig ist, für das herkömmliche Farbabwalzverfahren zum Einfärben der erhabenen Ränder und Zeichen des Schildes eine auf der reflektierenden Kunststoffolie gut haftende, dauerhafte Farbe zu finden. Die DE 37 41 232 A1 sieht eine Vorrichtung zum Einfärben von gepräften Schildern, insbesondere Kfz.-Kennzeichenschildern, vor, die es ermöglicht, auf rationelle Weise die erhabenen Ränder und Zeichen von Kfz.-Kennzeichenschildern mit heiß aufbringbarer, dauerhafter Farbe einzufärben. Dabei wird die Farbe durch eine beheizte Andrückwalze von einer Trägerfolie abgelöst und auf die Zeichen und Ränder des Schildes aufgetragen.

Die Trägerfolie mit Farbschicht wird dabei von einer Abwickelspule abgezogen, und nach Abgabe der Farbschicht wird die verbrauchte Trägerfolie auf einer Aufwickelspule aufgerollt. Die Mindestbreite der mit heiß ablösbarer Farbe beschichteten Kunststoffolie muß der Breite eines Kfz-Kennzeichenschildes entsprechen. Das Folienband und besonders die Farbschicht sind relativ teuer, so daß durch Heißprägen eingefärbte Kennzeichenschilder ebenfalls relativ teuer werden.

Hier setzt die Erfindung ein und gibt dem Schildpräger "draußen im Lande" Schildplatinen in die Hand, die bereits einen eingefärbten geprägten Rand aufweisen, so daß der Schild-Endhersteller und -Verkäufer beim Einfärben der von ihm geprägten Zahlen und Buchstaben bei Verwendung einer Vorrichtung nach der vorgenannten DE 37 41 232 A1 eine schmälere und daher billigere, mit heiß ablösbarer Farbe beschichtete Kunststoffolie einsetzen kann.

Um dies zu ermöglichen, sieht das erfindungsgemäße Verfahren beim Herstellen einer Platine für Kfz.-Kennzeichenschilder entsprechend dem Oberbegriff des Patentanspruchs 1 vor, daß vor dem Abschneiden der Platine und Prägen des Randes derselben die Färbung des Randes vorgesehen wird.

Die Einfärbung des Randes kann auf verschiedene Weise erfolgen. Voraussetzung ist, daß die Färbung des Randes ebenso resistent ist wie die nachher durch Heißprägen auf die erhabenen Zeichen aufgebrachte Farbe.

Bei der Fertigung der Kennzeichenplatinen kann eine reflektierende Folie aufkaschiert werden, in der sich bereits die Randfärbung des Schildes befindet. Durch entsprechende Abtaster (Scanner) kann dabei sichergestellt werden, daß der Rand nach dem Aufkaschieren der reflektierenden Folie genau dort geprägt wird, wo sich die Randfärbung befindet.

Es können auch physikalisch trocknende oder Einbrennlacke für die separate Randfärbung verwendet werden.

Die separate Einfärbung des Schildrandes kann in ein Verfahren integriert werden, das in der DE-PS 32 03 801 beschrieben wird, wobei allerdings die dort vorhandene, als Paginiervorrichtung ausgebildete Prägepresse für die Buchstaben und Zahlen (Legende) der Kennzeichenschilder nicht benötigt wird, sondern nur die Prägewerkzeuge für den Schildrand.

Das Verfahren ist anwendbar nicht nur bei vollbelegten Platinen, sondern auch bei teilbelegten Schildplatinen, d.h. bei solchen, bei denen nur auf die Fläche innerhalb des Schildrandes und nicht auf den Rand selbst die reflektierende Folie aufkaschiert wird. Dabei wird in der Regel als Ausgangswerkstoff ein als Coil gewickeltes, einseitig weiß lackiertes bzw. grundiertes Aluminiumband (beispielsweise bei normalen deutschen Kfz.-Kennzeichen) verwendet, so daß auf den weiß lackierten bzw. grundierten Schildrand auch einfachere Einfärbungslacke verwendet werden können, die auf einer Farbgrundierung ausreichend gut haften, während sie, wie geschildert, auf der reflektierenden Kunststoffolie nicht so dauerhaft sind. Dabei ist auch an Tusche und Tinte zu denken, die in die Farbgrundierung eindringen.

Bei der vollautomatischen Massenherstellung der Platinen für Kfz.-Kennzeichenschilder fällt die zusätzliche Einfärbung des Schildrandes kaum ins Gewicht, während der Endverbraucher, d.h. derjenige, der "draußen im Lande" die Legenden der Kennzeichenschilder prägt und mit heiß aufdrückbarer Farbfolie einfärbt, die billigere, schmälere Trägerfolie bzw. eine Trägerfolie mit schmäleren Streifen heiß ablösbarer Farbe verwenden kann, so daß dort bei der Endstation der Kennzeichen-Herstellung Kosten auch für den Fahrzeughalter eingespart und dennoch die nunmehr vorgeschriebenen reflektierenden Kfz.-Kennzeichenschilder dauerhaft eingefärbt werden.

## Patentansprüche

1. Verfahren zur Herstellung von Platinen für Kraftfahrzeug-Kennzeichenschilder, deren erhabene Ränder und Zeichen durch Aufdrücken eines mit heiß ablösbarer Farbe beschichteten Kunststoff-Folienbandes eingefärbt werden, wobei zunächst von einem Coil ein Aluminium-Blechband abgezogen wird, auf das dann eine reflektierende Kunststoffolie aufkaschiert wird, und wobei daraufhin Einzelschilder-Platinen abgeschnitten und mit geprägtem Rand versehen werden, dadurch gekennzeichnet, daß vor dem Abschneiden der Platine und Prägen des Randes derselben die Färbung des Randes vorgesehen wird.

2. Verfahren nach Anspruch 1, dadurch gekennzeichnet, daß die Randfärbung in der reflektierenden Kunststoffolie vorgesehen wird.

3. Verfahren nach Anspruch 1, dadurch gekennzeichnet, daß die Randfärbung vor dem Prägen des Randes durch lichtaushärtenden Lack aufgebracht wird.

4. Verfahren nach Anspruch 1, dadurch gekennzeichnet, daß die Randfärbung durch physikalisch trocknenden Lack aufgebracht wird.

5. Verfahren nach Anspruch 1, dadurch gekennzeichnet, daß die Randfärbung durch Einbrennlack aufgebracht wird.

6. Verfahren nach einem der Ansprüche 1 bis 5, dadurch gekennzeichnet, daß es sowohl bei teilbelegten Schildern, d.h. bei solchen, die nur auf der Fläche innerhalb des Randes mit reflektierender Folie belegt sind, als auch bei voll belegten Schildern, d.h. bei solchen, bei denen die reflektierende Folie auch auf dem Rand vorgesehen ist, angewandt wird.

## Claims

1. A method of making base plates for vehicle number plates, whose raised edges and symbols are coloured by impressing a plastics film strip coated with heat released colour, wherein a aluminium sheet strip is firstly drawn from a coil, on which strip a reflecting plastics film is laminated and wherein individual base plates are then cut off and provided with a embossed edge, characterized in that the colouring of the edge is effected before cutting off the base plate and embossing the edge.

2. A method according to claim 1, characterized in that the edge colouring is provided in the reflective plastics film.

3. A method according to claim 1, characterized in that the edge colouring is applied before embossing the edge by light-hardening lacquer.

4. A method according to claim 1, characterized in that the edge colouring is applied by physically drying lacquer.

5. A method according to claim 1, characterized in that the edge colouring is applied by fired on lacquer.

6. A method according to any one of claims 1 to 5, characterized in that it is used both with partially coated plates, i.e. those which are only coated with reflective film on the area within the edge, and with fully coated plates, i.e. those in which the reflective film is also provided on the edge.

## Revendications

1. Procédé de fabrication de platine pour des plaques d'immatriculation de véhicules automobiles, dont les bords surélevés et les caractères sont colorés par impression d'une bande formée d'une feuille de matière plastique revêtue d'un colorant pouvant être détaché à chaud, qui consiste à dérouler tout d'abord d'une bobine une bande de tôle d'aluminium, sur laquelle on appose alors par placage une feuille de matière plastique réfléchissante et à découper ensuite des platines de plaques individuelles et à les munir d'un bord gaufré, caractérisé par le fait qu'avant le découpage de la platine et le gaufrage de son bord, on prévoit de colorer le bord.

2. Procédé suivant la revendication 1, caractérisé par le fait que la coloration du bord est prévue dans la feuille de matière plastique réfléchissante.

3. Procédé suivant la revendication 1, caractérisé par le fait que la coloration du bord est effectuée, par un vernis durcissant sous l'action de la lumière, avant le gaufrage du bord.

4. Procédé suivant la revendication 1, caractérisé par le fait qu'on effectue la coloration du bord un vernis séchant par voie physique.

5. Procédé suivant la revendication 1, caractérisé par le fait qu'on effectue la coloration du bord par un vernis à cuire.

6. Procédé suivant l'une des revendications 1 à 5, caractérisé par le fait qu'on l'utilise aussi bien dans le cas de plaques partiellement revêtues, c'est-à-dire de plaques, qui sont revêtues d'une feuille réfléchissante uniquement sur la surface située à l'intérieur du bord, que pour des plaques complètement revêtues, c'est-à-dire des plaques, dans lesquelles la feuille réfléchissante est prévue également sur le bord.
